# EUROPEAN PATENT APPLICATION

(11) **EP 3 961 148 A1**
(43) Date of publication of application: **02.03.2022**
(21) Application number: 20794793.8
(22) Date of filing: 13.02.2020
(51) Int. Cl.: G01B 11/00, G01B 11/25

(54) **DIMENSIONING DEVICE AND LOCKER FOR LUGGAGE SHIPPING**

(30) Priority: 25.04.2019 JP 2019084305
(71) Applicant: Panasonic Intellectual Property Management Co., Ltd., Osaka-shi, Osaka 540-6207 (JP)
(72) Inventor: NISHIMURA Takeshi, Osaka-shi, Osaka 540-6207 (JP); KADOWAKI Nobuaki, Osaka-shi, Osaka 540-6207 (JP)
(74) Representative: Müller-Boré & Partner Patentanwälte PartG mbB
(86) International application number: PCT/JP2020/005503
(87) International publication number: WO 2020/217651

(57) **Abstract**

A dimensioning device (20) includes: a storage chamber for removably storing an object to be measured; a three-dimensional measurement device (23) that has two cameras for imaging, from different positions, the object to be measured which is stored in the storage chamber and that measures, from images captured by the two cameras, the distance to the object to be measured; and a control device (30). In a state where the coordinates of three orthogonally intersecting reference planes, which are approximate to three adjacent surfaces of a storage chamber without an object to be measured, are registered and the object to be measured is stored in the storage chamber, the control device determines, from the distance to each of a plurality of measurement points of the object to be measured, the distance from the three reference planes of each measurement point, the object to be measured having been measured by the three-dimensional measurement device. Thereafter, the control device measures, for each reference plane, the dimension of the object to be measured in a direction orthogonal to each reference plane on the basis of the number of measurement points that are the same distance from the reference plane.

## Description

### TECHNICAL FIELD

The present disclosure relates to a dimension measuring device and a package delivery locker.

### BACKGROUND FIELD

Conventionally, as disclosed in Patent Literature 1, a device has been known which is a device for measuring a dimension of a to-be-measured object such as a delivery object, and including a compartment accommodating the to-be-measured object, an image capturing unit (camera) capturing an image of the inside of the compartment, and an image processing unit performing image processing based on information on the image captured by the image capturing unit to measure a dimension of the to-be-measured object.

### CITATION LIST

### PATENT LITERATURE

Patent Literature 1: JP 2017-150907 A

### SUMMARY

### TECHNICAL PROBLEM

In order to measure the dimension of the to-be-measured object in the dimension measuring device described above, it is conceivable to set a master frame formed by a plurality of straight lines in advance corresponding a shape of the compartment in an initial attaching stage of the cameras or the image to be acquired in the image processing unit. The master frame is set corresponding to three flat surfaces being in contact with corners of the compartment, for example. However, there is a possibility that variations in the installation of the camera and positional misalignment due to long-term use or temperature change will occur, causing errors in the dimensions measured based on the image captured by the camera or the captured image and the master frame.

It is an advantage of the present disclosure to provide a dimension measuring device and a package delivery locker capable of measuring a dimension of a to-be-measured object with high accuracy.

### SOLUTION TO PROBLEM

The present disclosure provides a dimension measuring device including: a compartment in which a to-be-measured object is accommodated so as to be capable of being taken in and out; a three-dimensional measuring device including two cameras that capture images of the to-be-measured object accommodated in the compartment from different positions and configured to measure a distance to the to-be-measured object from the images captured by the two cameras; and a control device configured to register coordinates of three reference planes approximate to three adjacent surfaces of the compartment and orthogonal to each other in a state where the to-be-measured object is not accommodated in the compartment, to obtain, based on distances to a plurality of measurement points of the to-be-measured object measured by the three-dimensional measuring device in a state where the to-be-measured object is accommodated in the compartment, distances from the three reference planes relating to each of the plurality of measurement points, and to measure dimensions of the to-be-measured object in directions orthogonal to the three reference planes based on, relating to each of the three reference planes, the number of measurement points having the same distance from the reference plane.

The present disclosure provides a package delivery locker including the dimension measuring device of the present disclosure.

### ADVANTAGEOUS EFFECTS OF INVENTION

According to the dimension measuring device and the package delivery locker of the present disclosure, even when variations in the installation of the cameras occur or positional misalignment occurs due to long-term use or temperature change, the dimension of the to-be-measured object can be measured more accurately based on the distance to the to-be-measured object measured by the three-dimensional measuring device and the three reference planes.

### BRIEF DESCRIPTION OF DRAWINGS

FIG. 1 is a perspective view of a package delivery locker including a dimension measuring device according to an embodiment of the present disclosure.
FIG. 2 is a perspective view showing an example of a compartment of the dimension measuring device.
FIG. 3 is a block diagram showing a configuration of the dimension measuring device according to the embodiment of the present disclosure.
FIG. 4 is a view illustrating a principle of measuring a distance to a measurement point with a three-dimensional measuring device.
FIG. 5 is a view showing a state where three reference planes approximate to three adjacent surfaces of the compartment are registered without a package which is a to-be-measured object in the compartment.
FIG. 6 is a view corresponding to captured images of a package and the compartment in a state where the package is accommodated in the compartment.
FIG. 7(a) shows a captured image in which a package is disposed in the compartment, and FIG. 7(b) is a view corresponding to FIG. 7(a) and shows a range of a plurality of measurement points having distance data.
FIG. 8 is a view showing a measurement dimension of the package in the captured image of FIG. 5.
FIG. 9 is a view showing a relation between distances of the package from the reference planes in a height direction (z-direction), a width direction (x-direction), and a depth direction (y-direction), and the number of measurement points.
FIG. 10 is a view showing a state where a shape as noise is displayed on a rear side of the package in the captured image.
FIG. 11 is a view corresponding to FIG. 8 and shows a captured image of a package and a measurement compartment according to another example of the embodiment in a state where the package of another example is accommodated in the compartment.
FIG. 12 is a view showing a state where data in a range of a constant distance from a first reference plane H is removed in the state where the package of another example is accommodated in the compartment.
FIG. 13 is a view showing a relation between distances to the package of another example from reference planes in a height direction (Z-direction), a width direction (X-direction), and a depth direction (Y-direction) and the number of measurement points of the package.
FIG. 14 is a view showing a captured image in another example of the embodiment when the package is irradiated by a pattern irradiation unit in a state where the package is accommodated in the compartment.
FIG. 15 is a view showing a method of measuring distances to measurement points with the three-dimensional measuring device, FIG. 15(a) shows a case where patterns are different from each other at adjacent measurement points, and FIG. 15(b) shows a case where patterns are similar to each other at adjacent measurement points.
FIG. 16 is a view showing a state where a flat surface is irradiated by pattern irradiation units including light emitting parts of different emission colors in another example of the embodiment.

### DESCRIPTION OF EMBODIMENT

An embodiment of the present disclosure will be described below with reference to the drawings. Shapes and numbers described below are examples for description, and can be appropriately changed according to specifications of a package delivery locker including a dimension measuring device. In the following, equivalent components will be described with the same reference characters in all the drawings.

In the following description and drawings, reference character R indicates a right side when viewed toward the package delivery locker, reference character L indicates a left side when viewed toward the package delivery locker, reference character F indicates a front side of the package delivery locker, and reference character B indicates a rear side of the package delivery locker. A connecting direction between R and L is orthogonal to a connecting direction between F and B.

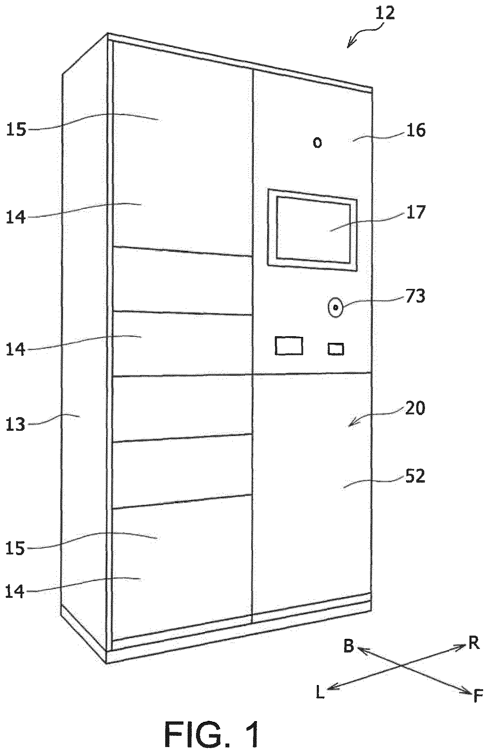

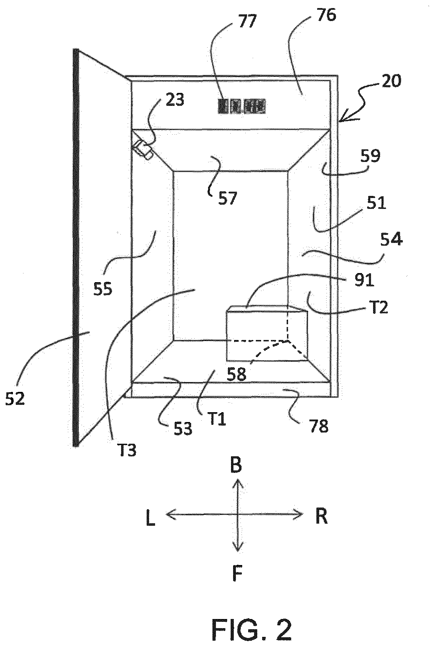

FIG. 1 is a perspective view of a package delivery locker 12 including a dimension measuring device 20 according to the embodiment of the present disclosure. FIG. 2 is a perspective view showing an example of a measurement compartment 51 of the dimension measuring device 20. The package delivery locker 12 is installed in a public place that can be used by unspecified persons, and can be used to send a delivery object by a number of unspecified persons.

As shown in FIG. 1, the package delivery locker 12 includes an exterior body (main body) 13 having a substantially rectangular parallelepiped shape, a plurality of package delivery compartments 14, doors 15 for opening and closing openings of the package delivery compartments 14, a dimension measuring device 20, and an operation panel unit 16. Hereinafter, the dimension measuring device 20 may be referred to as a measuring device 20. The package delivery compartments 14 are vertically disposed parallel to each other on a left side L of the exterior body 13 and have a box shape in which a package 91 (FIG. 2) can be accommodated to be taken in and out. FIG. 2 shows a case where the package 91 is a delivery object having a rectangular parallelepiped outer shape. The package 91 corresponds to an object to be measured.

The door 15 covers an opening on the front side F of the package delivery compartment 14. The door 15 is a single swing door attached to the package delivery locker 12, and can open and close the opening of the package delivery compartment 14 by swinging around a vertical shaft (not shown). The door 15 is locked with an electric lock (not shown). The electric lock is unlocked by a user's operation or the like on an operation display part 17 which will be described below.

The electric lock may be configured to be released by means of barcodes, QR codes (registered trademark), transmission and reception of radio signals using Bluetooth (registered trademark) or the like with mobile terminals such as smartphones, or an input on touchless keys, IC cards, or a numeric keypad using radio waves or infrared rays or the like.

The measuring device 20 is disposed at a lower half of the right side R of the exterior body 13 and includes a measurement compartment 51 (FIG. 2) and a door 52 that covers an opening on the front side F of the measurement compartment 51 to be openable and closable. A configuration and a function of the door 52 are similar to those of the door 15 of the package delivery compartment 14.

A weight measuring unit 78 (FIG. 2) is disposed at a bottom of an inside of the measurement compartment 51. The weight measuring unit 78 includes, for example, an elastic member (not shown) disposed between a movable part on which a package is placed on an upper surface thereof and a fixed part disposed below the movable part. A weight of the package 91 is measured based on a distance of the movable part to be moved downwards. The measured weight is displayed by a weight display part 77 provided on a panel part 76 exposed at an upper part of the measurement compartment 51. The upper surface of the movable part corresponds to a bottom surface of the measurement compartment 51. The weight measuring unit 78 may be used as a package sensor that detects that the package 91 is placed on the measurement compartment 51 when the measured weight is equal to or more than a predetermined value. A configuration of the measuring device 20 will be described in detail below.

The operation panel unit 16 is disposed on an upper side of the measuring device 20 in the exterior body 13. An operation display part 17 and an electric money settlement part 73 are attached to the operation panel unit 16.

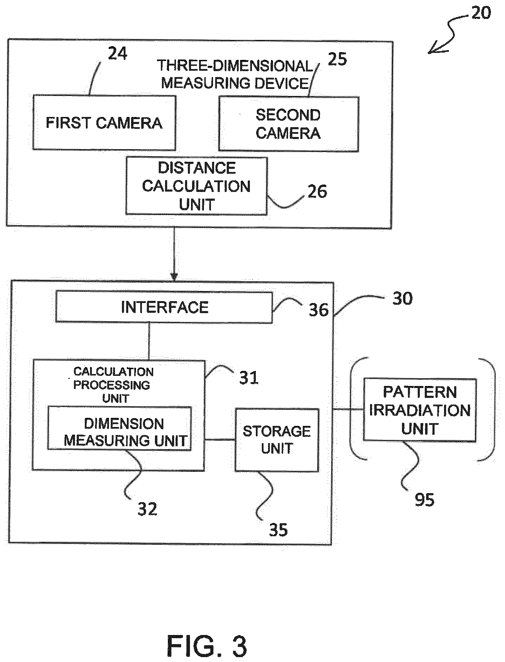

The operation display part 17 includes a touch panel display or the like and has a function of receiving an operation input of a user and of performing display. For example, when a menu screen is displayed on the operation display part 17 and the user touches and selects any item from a plurality of items displayed on the menu screen, a control device 30 (FIG. 3) executes processing according to the selection. For example, on the menu screen, "measurement" is displayed as a trigger for the start of dimension measurement.

The electric money settlement part 73 is an IC card reader, for example. The electric money settlement part 73 transmits and receives radio signals to and from an IC card owned by the user to settle transactions using electronic money. Instead of the operation display part 17, a display part including a liquid crystal display (LCD) and an operation part including a numeric keypad or the like may be provided. Further, instead of the IC card reader, the settlement part may be configured to settle by input of an identification number and a password of a credit card with a numeric keypad. At the operation display part 17, a barcode reader may be disposed in place of or in addition to the electric money settlement part 73.

The door 15 of the package delivery compartment 14 may be unlocked by an IC card or the like read by the electric money settlement part 73 or a barcode read by the barcode reader.

When a package sender, who is a customer of a delivery service person, performs a delivery requests of the package using the package delivery locker 12, the delivery request may be performed as follows. For example, when the sender selects a part where "measurement" is displayed on the menu screen displayed on the operation display part 17 of the package delivery locker 12, images of the inside of the measuring device 20 are automatically captured by a first camera 24 and a second camera 25 (FIG. 3) of a three-dimensional measuring device 23 (FIGS. 2 and 3), and then the door 52 of the measuring device 20 is automatically opened. When the sender puts the package 91 (FIG. 2) in the measurement compartment 51 and closes the door 52, the first camera 24 and the second camera 25 captures an image of the package 91. Then, the three-dimensional measuring device 23 measures a distance to each of measurement points of the package 91 based on the information of the image captured by each of the cameras 24 and 25. Then, a dimension measuring unit 32 (which will be described below) of the control device 30 measures dimensions in a height direction, a width direction, and a depth direction of the package 91 based on the measured distance, and measurement results are displayed on the operation display part 17.

The sender inputs an address of a delivery destination and the like using the operation display part 17, and then takes out the package of the measurement compartment 51. The sender may register the delivery address in advance by making an advance reservation using the Internet instead of the operation display part 17. Then, the sender selects one of the package delivery compartments 14 using the operation display part 17. The door 15 of the package delivery compartment 14 selected in this way is unlocked and the door 15 is automatically opened, so that the sender puts the package into the package delivery compartment 14. For example, a package sensor (not shown) detects that the package is put into the package delivery compartment 14. Then, since the operation display part 17 displays a delivery fee calculated based on the measurement result of the dimension, the sender settles the delivery fee with the electric money settlement part 73 or the like. The settlement may be made at a fee settlement place located at a different position to the package delivery locker 12. Although FIG. 1 shows a case where the package delivery locker 12 includes one measurement compartment 51, a plurality of measurement compartments 51 may be provided.

When the delivery fee is settled, the package delivery locker 12 notifies information on the delivery request of the package to a terminal device of the delivery service person, a terminal device of the sender, and a management server via a communication network. Therefore, the delivery service person goes to the place where the package delivery locker 12 is installed, opens the door 15 of the corresponding package delivery compartment 14, takes out the package from the package delivery compartment 14, and sends the package to the delivery destination.

Next, the measuring device 20 will be described in detail. FIG. 3 is a block diagram showing a configuration of the measuring device 20. The measuring device 20 includes the measurement compartment 51 and the door 52 shown in FIG. 2, the three-dimensional measuring device 23, and the control device 30. The control device 30 includes a calculation processing unit 31.

As shown in FIG. 2, the measurement compartment 51 has a box shape in which the package 91 is placed, to be taken in and out. The measurement compartment 51 has three adjacent surfaces intersecting each other at a reference corner 58, which is a right rear corner. Specifically, the measurement compartment 51 is a rectangular parallelepiped space surrounded by a bottom plate part 53, three side wall parts of a right wall part 54, a left wall part 55, and a rear wall part 56, and a top plate part 57. An opening 59 covered by the door 52 is formed on the front side F of the measurement compartment 51. The bottom plate part 53, each of the wall parts 54, 55, and 56, and the top plate part 57 have a rectangular shape. The upper surface of the bottom plate part 53 is a first surface T1, an inside surface of the right wall part 54 is a second surface T2, and an inside surface of the rear wall part 56 is a third surface T3. The first surface T1, the second surface T2, and the third surface T3 are adjacent to each other. The package 91, which is a delivery object, is placed on the first surface T1.

The reference corner 58 is a position the package 91 is pushed into when the package 91 is placed in the measurement compartment 51, and is located at the rear corner of the right side R. The package 91 is placed in the measurement compartment 51 so as to match the reference corner 58. Three surfaces of a lower surface and two adjacent side surfaces of the package 91 are substantially in contact with the first surface T1, the second surface T2, and the third surface T3 of the measurement compartment 51, respectively.

The three-dimensional measuring device 23 shown in FIG. 3 includes two cameras, that is, a first camera 24 and a second camera 25, and a distance calculation unit 26. The first camera 24 and the second camera 25 are attached near the opening 59 at an upper end on the left side L of the measurement compartment 51 shown in FIG. 2, and capture an image of the package 91, which is placed on the measurement compartment 51, in an obliquely downward direction. At this time, the first camera 24 and the second camera 25 capture images of the package 91 from two different positions. The three-dimensional measuring device 23 measures distances from the captured images of the cameras 24 and 25 to the package 91 based on triangulation. A principle of measuring the distance with the three-dimensional measuring device 23 will be described below. The distance measured by the three-dimensional measuring device 23 is transmitted to the control device 30 to be described below.

For example, CCD cameras are used for the first camera 24 and the second camera 25 of the three-dimensional measuring device 23 to capture images. The first camera 24 and the second camera 25 may be CMOS cameras that capture images. Operation of each of the cameras 24 and 25 is controlled by the control device 30.

Information on the image captured by each of the cameras 24 and 25 is transmitted to the control device 30. The image captured by each of the cameras 24 and 25 may be a grayscale image or a color image. When the image is a color image, the image may be converted into a grayscale image at the time of image processing. The control device 30 can be disposed, for example, around the top plate part 57 (FIG. 2) forming an upper end of the measurement compartment 51, or around the operation display part 17 of the package delivery locker 12 shown in FIG. 1.

The three-dimensional measuring device 23 may include a lighting device that illuminates and brightens the inside of the measurement compartment 51, particularly the lower part thereof. The lighting device is turned on and off by control of the control device 30. For the lighting device, for example, a white LED is used, but fluorescent lamps, light bulbs, and LEDs of other colors may be used. The dimension measuring device 20 is a different device to the three-dimensional measuring device 23, and may include a lighting device that illuminates the inside of the measurement compartment 51.

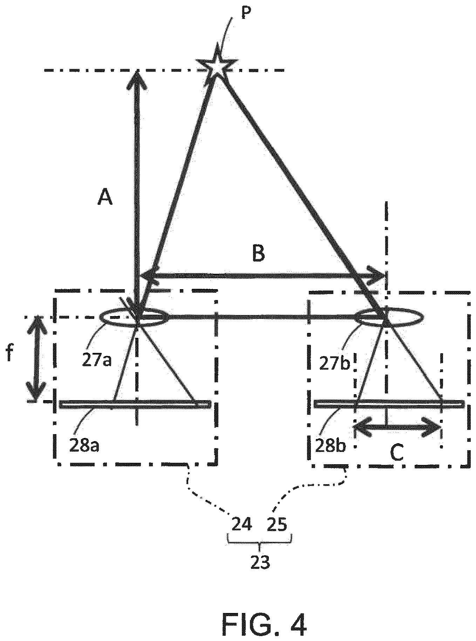

FIG. 4 is a view illustrating a principle of measuring a distance to a measurement point P with the three-dimensional measuring device 23. A case is considered in which the first camera 24 and the second camera 25 of the three-dimensional measuring device 23 receive light from the same measurement point P from different positions. The first camera 24 and the second camera 25 include lenses 27a and 27b and image capturing surfaces 28a and 28b as light receiving parts, which receive light that is incident through the lenses 27a and 27b, respectively. The image capturing surfaces 28a and 28b photoelectrically convert the received light to generate an electrical signal according to the amount of received light, and output the electrical signal to the distance calculation unit 26 (FIG. 3). The image capturing surfaces 28a and 28b are CCD image sensors or CMOS image sensors, for example.

Based on the electrical signals from the first camera 24 and the second camera 25, the distance calculation unit 26 measures the distance to the measurement point P based on triangulation. For example, a distance from each of the lenses 27a and 27b to the measurement point P in a direction orthogonal to a connecting direction of the lenses 27a and 27b of the first camera 24 and the second camera 25, that is, a distance from the three-dimensional measuring device 23 to the measurement point P, is defined as A. Further, a distance between the two lenses 27a and 27b is defined as B. In addition, parallax is defined as C, and is a deviation of the image capturing position of the measurement point P caused by a difference in a direction from the two lenses 27a and 27b on image capturing surfaces 28a and 28b toward the measurement point P. Further, focal distances are defined as f, and are distances between the lenses 27a and 27b and the image capturing surfaces 28a and 28b. At this time, the distance A is obtained by A = B × f/C. Based on such a principle, the distance A from the three-dimensional measuring device 23 to the measurement point P can be measured using the distance B between the lenses, the focal distance f, and the parallax C. In the embodiment, the distances to the plurality of measurement points set on the outer surface of the package 91 are measured by the three-dimensional measuring device 23, as will be described below. The measured distances are transmitted to the control device 30 (FIG. 3).

As shown in FIG. 3, the control device 30 includes, for example, a calculation processing unit 31 configured by an MCU (Micro Controller Unit) and a storage unit 35. The storage unit 35 may be a RAM or a ROM, for example. The calculation processing unit 31 has a function of reading and executing a program and the like that is stored in the storage unit 35 in advance. The storage unit 35 has a function of temporarily storing the read program and processing data, and a function of storing a control program and predetermined threshold values in advance.

By the control device 30 executing the program, the function of the subject of the device, the system, or the method in the present disclosure is realized. The type of the calculation processing unit 31 does not matter as long as the function can be realized by executing the program. For example, the calculation processing unit may be a CPU. The calculation processing unit may be configured by one or a plurality of electronic circuits including a semiconductor integrated circuit (IC) or an LSI (large scale integration). The plurality of electronic circuits may be integrated on one chip, or may be provided on a plurality of chips. The plurality of chips may be integrated in one device, or may be provided in a plurality of devices. As the storage unit, a non-transitory recording medium such as an optical disk drive or a hard disk drive may be used. An external storage device may be connected to the control device 30 as a storage unit. The program may be stored in the recording medium in advance, or may be supplied to the recording medium via a wide area communication network including the Internet or the like.

The control device 30 also includes an interface 36. The operation display part 17 (FIG. 1) is connected to the calculation processing unit 31 via the interface 36. At least one of a personal computer (PC), an input device, and a monitor, which is a display, may be connected to the calculation processing unit 31 via the interface.

The calculation processing unit 31 further includes a dimension measuring unit 32. The dimension measuring unit 32 measures a dimension of the package 91 accommodated in the measurement compartment 51 (FIG. 2), based on the distance to the package 91 measured by the three-dimensional measuring device 23 and coordinates of three reference planes which will be described below.

Next, a description will be given in more detail with respect to a method of measuring the distance with the three-dimensional measuring device 23 and a method of measuring the dimension of the package 91 based on the distance measured in this way.

With reference to FIG. 2, each of the cameras 24 and 25 of the three-dimensional measuring device 23 previously captures images of the first surface T1, the second surface T2, and the third T3, in a state where the package 91 is not accommodated in the measurement compartment 51, and obtain original images. Information on the original images obtained by each of the cameras 24 and 25 are transmitted to the control device 30, and are stored in the storage unit 35 of the control device 30. The control device 30 registers coordinates in a space where three-axis coordinates xyz of three reference planes are set, based on information on the original image of each of the cameras 24 and 25, the three-dimensional measuring device 23, and the measured values of the distances of the surfaces T1, T2, and T3, and allows the storage unit 35 to store the registered coordinates.

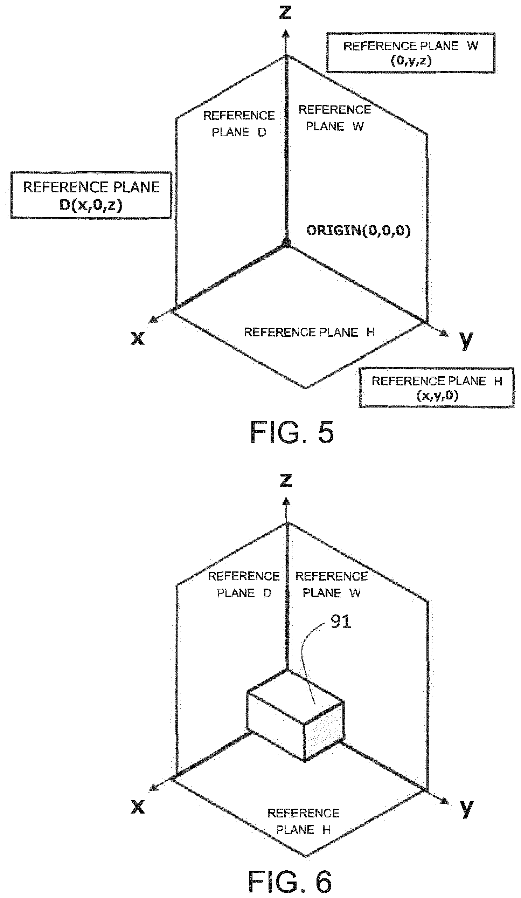

FIG. 5 is a view showing a state where three reference planes H, W, and D approximate to the three adjacent surfaces T1, T2, and T3 (FIG. 2) of the measurement compartment 51 are registered without the package 91 in the measurement compartment 51. The first reference plane H is a plane approximate to the first surface T1, the second reference plane W is a plane approximate to the second surface T2, and the third reference plane D is a plane based on the third surface T3. The first reference plane H, the second reference plane W, and the third reference plane D are adjacent to each other so as to be intersected and orthogonal to each other at an origin. The origin corresponds to the reference corner 58 (FIG. 2). Regarding coordinates of (x, y, z), coordinates of the first reference plane H are (x, y, 0), coordinates of the second reference plane W are (0, y, z), and coordinates of the third reference plane D are (x, 0, z). For example, when values of a, b, c, and d are set in each of the reference planes H, W, and D, each of the reference planes H, W, and D is represented by a formula of ax + by + cz + d = 0.

Next, in a state where the package 91 is accommodated in the measurement compartment 51 (FIG. 2) so as to be substantially in contact with the respective surfaces T1, T2, and T3 of the measurement compartment, each of the cameras 24 and 25 (FIG. 3) of the three-dimensional measuring device 23 captures an image of the package 91. FIG. 6 is a view corresponding to the captured image of the package 91 and the measurement compartment 51 in the state where the package 91 is accommodated in the measurement compartment 51. In the control device 30 (FIG. 3), as shown in FIG. 6, the positions of the reference planes H, W, and D are registered corresponding to the captured image, and the distance to the package 91 from the three-dimensional measuring device 23 is stored. At this time, as the distance to the package 91, the distance to the entire surface of the package 91 shown in the captured image does not need to be stored, and a distance to some of the measurement points of the three surfaces of the package 91 captured by the three-dimensional measuring device 23 may be registered.

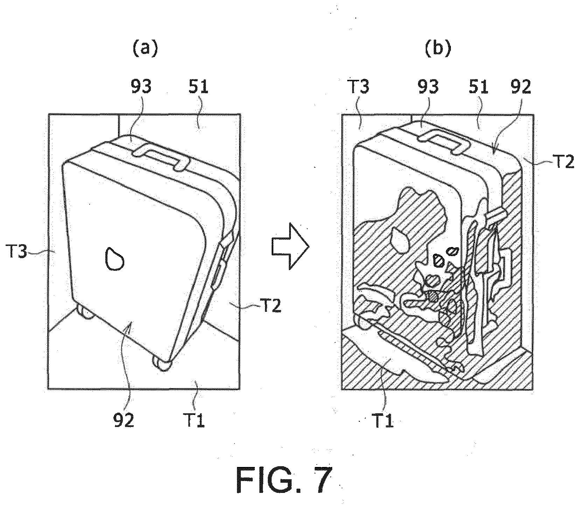

FIG. 7(a) shows a captured image in which a package 92 is disposed in the measurement compartment 51, and FIG. 7(b) is a view corresponding to FIG. 7(a) and shows a range of a plurality of measurement points having distance data. FIG. 7 shows a case where the package 92 is a suitcase having a shape other than a rectangular parallelepiped shape. When an image as shown in FIG. 7(a) is captured by the three-dimensional measuring device 23, the three-dimensional measuring device 23 acquires distance information from some measurement points of the image. In FIG. 7(b), a plain part indicates a group of measurement points for which distance information is acquired, and a shaded part indicates a part not having distance information. As shown in FIG. 7(b), the three-dimensional measuring device 23 may include distances to three surfaces T1, T2, and T3 of the measurement compartment, a distance to a part including the vicinity of the upper end surface 93 of the package 92 in a direction substantially orthogonal to the first surface T1, and a distance to a part including end surfaces in a direction substantially orthogonal to the second surface T2 and in a direction substantially orthogonal to the third surface T3. Even when the package has the rectangular parallelepiped shape shown in FIG. 6, distance information for at least some of the surfaces may be acquired, as in the case of FIG. 7(b).

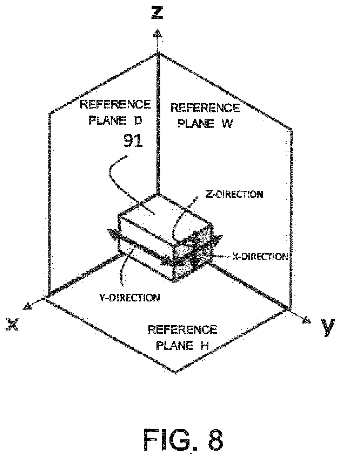

Next, as shown in FIG. 8, the control device 30 obtains distances from the first, second, and third reference planes H, W, and D for each of the plurality of measurement points, from the distances to the measurement point of the package 91 measured by the three-dimensional measuring device 23 in the state where the package 91 is accommodated in the measurement compartment 51. FIG. 8 is a view showing the measurement dimension of the package 91 in the captured image of FIG. 5. For example, when the coordinates (x, y, z) of any measurement point are obtained as (300, 400, 500), it means that a distance from the first reference plane H to the measurement point in a z-direction is 500, a distance from the second reference plane W to the measurement point in an x-direction is 300, and a distance from the third reference plane D to the measurement point in an y-direction is 400. The z-direction corresponds to the height direction, the x-direction corresponds to the width direction, and the y-direction corresponds to the depth direction. Thus, when the package 91 has a rectangular parallelepiped shape, the position of the package 91 having the largest number of measurement points at the distances from the reference planes H, W, and D can be regarded as a plane away from the reference plane of the package 91. Further, a distance between the surface of the package 91 and the reference plane can be regarded as a dimension of the package 91 in a predetermined direction. For example, the position in the z-direction of the package 91 having the largest number of measurement points near the position farthest from the first reference plane H in the z-direction is the dimension of the package 91 in the height direction. Further, the position in the x-direction of the package 91 having the largest number of measurement points near the position farthest from the second reference plane W is the dimension of the package 91 in the width direction. In addition, the position in the y-direction of the package 91 having the largest number of measurement points near the position farthest from the third reference plane D is the dimension of the package 91 in the depth direction.

Next, the control device 30 measures dimensions for each of the first, second, and third reference planes H, W, and D of the package 91 in a direction orthogonal to the reference plane H, W, or D based on the number of measurement points having the same distance from the reference plane H, W, or D. Specifically, for each of the reference planes H, W, and D, the dimension is measured by setting distances at which the number of measurement points having the same distance from the reference plane H, W, or D is maximum, as the dimension of the package 91 in the direction orthogonal to the reference plane H, W, or D.

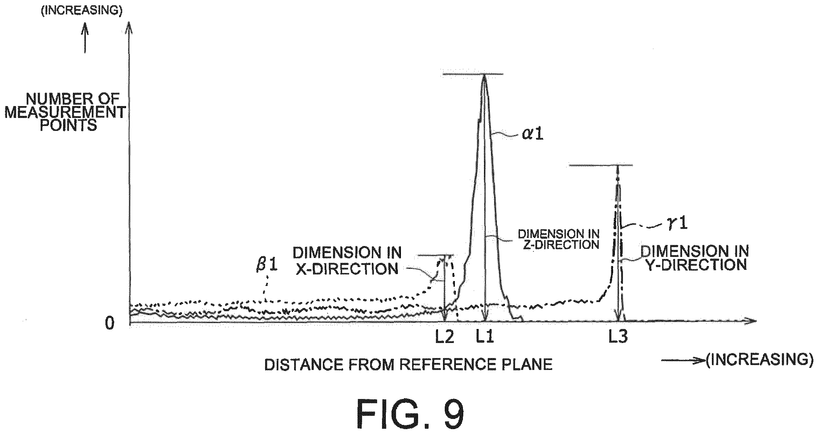

FIG. 9 shows a relation between the distance of the package 91 from the reference planes H, W, and D in the height direction (z-direction), the width direction (x-direction), and the depth direction (y-direction) and the number of measurement points. As described above, when the package 91 has the rectangular parallelepiped shape, the position of the package 91 having the largest number of measurement points at the distances from the reference planes H, W, and D can be regarded as a plane of the package 91 away from the reference planes H, W, and D, and the distance between the plane and the reference planes H, W, and D can be regarded as the dimension of the package 91. In FIG. 9, a solid line α1 indicates a relation between the distance from the first reference plane H to the plurality of measurement points of the package 91 and the number of measurement points. At this time, the number of measurement points is maximum at a position where the distance from the first reference plane H is L1. Thereby, the dimension measuring unit 32 (FIG. 3) of the control device 30 determines and measures the position of the distance L1 as the upper surface of the package 91 in the height direction (z-direction), and the distance L1 as a dimension of the package 91 in the height direction.

In FIG. 9, a broken line β1 indicates a relation between the distance from the second reference plane W to the plurality of measurement points of the package 91 and the number of measurement points. At this time, the number of measurement points is maximum at a position where the distance from the second reference plane W is L2. Thereby, the dimension measuring unit 32 determines and measures the position of the distance L2 as the side surface of the package 91 in the width direction (x-direction), and the distance L2 as a dimension of the package 91 in the width direction.

Further, an alternate long and short dash line γ1 in FIG. 9 indicates a relation between the distance from the third reference plane D to the plurality of measurement points of the package 91 and the number of measurement points. At this time, the number of measurement points is maximum at a position where the distance from the third reference plane D is L3. Thereby, the dimension measuring unit 32 determines and measures the position of the distance L3 as the side surface of the package 91 in the depth direction (y-direction), and the distance L3 as a dimension of the package 91 in the depth direction. The respective dimensions measured by the control device 30 are displayed on the operation display part 17 (FIG. 1).

In the above description, the case has been described in which the package 91 has the rectangular parallelepiped shape. On the other hand, when the package has a shape in which at least a part of the outer surface is not flat, that is, has a shape other than the rectangular parallelepiped shape, for only one or two reference planes corresponding to the plane of the package, distances at which the number of measurement points having the same distance from the reference planes is maximum may be measured as dimensions of the package in a direction orthogonal to the reference planes.

According to the measuring device 20 and the package delivery locker 12 including the measuring device 20, there is no need to set a master frame formed by a plurality of straight lines in advance corresponding the shape of the compartment in the initial attaching stage of the cameras or the image to be acquired. The reference planes H, W, and D registered in the embodiment are registered to be approximate to the actually captured image. Therefore, even when variations in the installation of the cameras 24 and 25 occur or the positional misalignment occurs due to long-term use or temperature change, the dimension of the package 91 can be measured more accurately based on the distance to the package measured by the three-dimensional measuring device 23 and the three reference planes H, W, and D.

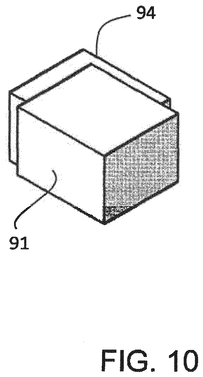

FIG. 10 is a view showing a state where a shape as noise is displayed on the rear side of the package 91 in the captured image. As shown in FIG. 10, in the captured image, a shape 94 as noise may be displayed on the rear side of the package 91 due to the influence of the parallax of the three-dimensional measuring device 23 or an error in performing calibration or the like. Then, when the dimension of the package is measured based on the shape including an edge in the captured image unlike the embodiment, a line of the shape 94 is erroneously recognized as an edge representing an actual boundary of the package 91, and thus it is conceivable that dimensional accuracy of the package 91 will deteriorate. On the other hand, according to the embodiment described above, since the dimension of the package 91 is measured based on the distances from the three reference planes H, W, and D that are substantially in contact with the three surfaces of the package 91, it is possible to reduce an adverse effect due to the noise shape by cutting the measurement points at the position on the side opposite to the package 91 from the reference planes H, W, and D, for example, on a minus side in a horizontal axis direction in FIG. 9.

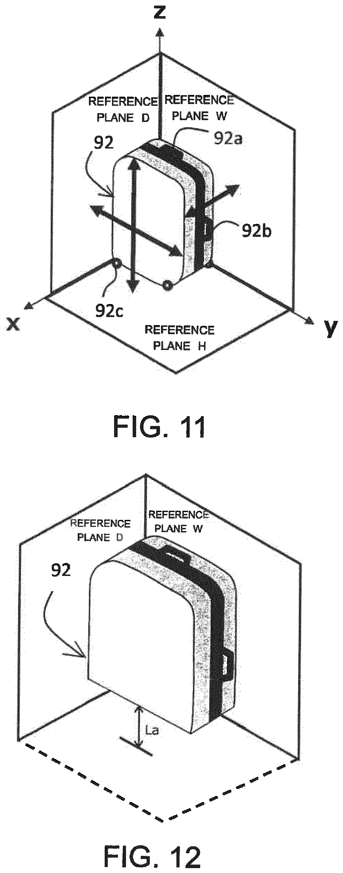

FIG. 11 is a view corresponding to FIG. 8 and shows a captured image of a package 92 and a measurement compartment 51 according to another example of the embodiment in a state where the package 92 of another example is accommodated in the measurement compartment 51. In the case of this example, the package 92 is a suitcase, and a dimension of the package 92 is measured. At this time, the package 92 does not have a rectangular parallelepiped shape. Handles 92a and 92b are attached to an upper surface and a side surface in the depth direction of the package 92, respectively, and dimensions in the height direction and the depth direction of the package 92 are determined at positions of the handles 92a and 92b. Therefore, as in the above configuration described with reference to FIGS. 1 to 10, the position having the largest number of measurement points at the distances from the reference planes H, W, and D can be regarded as a plane away from the reference planes H, W, and D of the package 92, but a distance between the surface and the reference planes H, W, and D cannot be regarded as a dimension of the package 92.

In addition, since wheels 92c are attached to a lower side of the package 92 and a gap is formed between the wheels and the first reference plane H, an error may occur due to noise, or speed of calculation processing may be reduced due to noise at the time of measurement of the dimension of the package 92. As a result, in this example, the dimension of the package 92 is measured in a state where some data of the package 92 is removed.

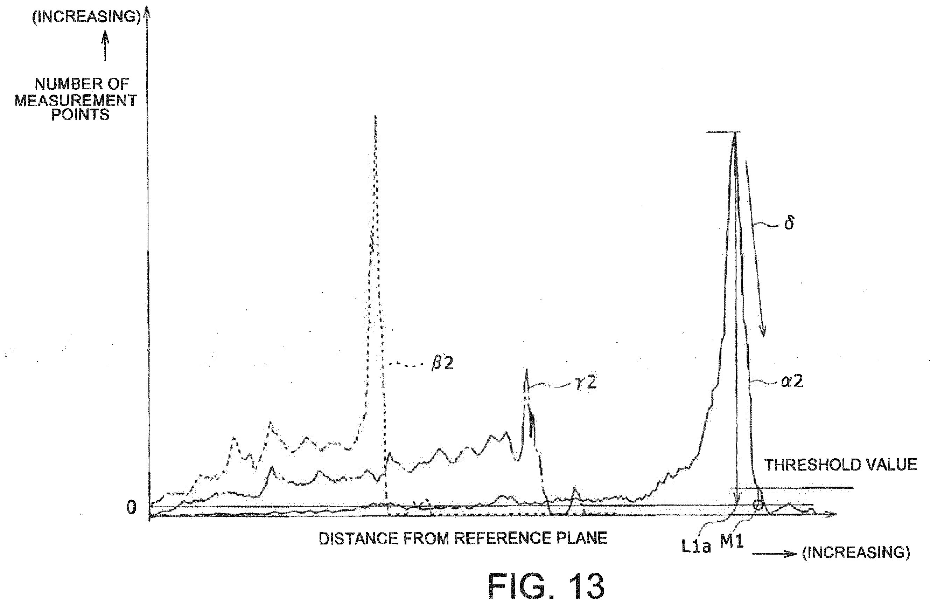

FIG. 12 shows a state where data in a range of a constant distance La from the first reference plane H is removed in the state where the package 92 is accommodated in the measurement compartment 51. As shown in FIG. 12, the control device 30 (FIG. 3) removes the data in the range of the constant distance La from the first reference plane H of the package 92 at the time of measurement of the dimension of the package 92. Then, the control device 30 uses data of the package 92 on the upper side of the package 92 in the height direction (z-direction) from the constant distance La to measure the dimension of the package 92 based on distances to measurement points of the package 92 from the reference planes H, W, and D, and adds the height of the removed constant distance La to a component in the height direction as an offset value. As a result, the dimensional accuracy of the package 92 can be improved, and the speed of calculation processing can be increased. Further, the control device 30 measures the dimensions in the height direction, the width direction, and the depth direction of the package 92 using a relation show in in FIG. 13.

FIG. 13 shows a relation between distances to the package 92 of another example from the reference planes H, W, and D in a height direction (Z-direction), a width direction (X-direction), and a depth direction (Y-direction) and the number of measurement points of the package 92. First, a method of measuring the dimension in the height direction of the package 92 will be described. As shown in FIG. 13, for the first reference plane H, which is at least one reference plane of the three reference planes H, W, and D, a line indicating a relation between the distance from the first reference plane H and the number of measurement points is indicated by a solid line α2. The dimension measuring unit 32 of the control device 30 measures a distance M1 at which the number of measurement points reaches a preset threshold value by movement in a distance increasing direction (in a direction of an arrow δ) from a distance L1a, at which the number of measurement points is maximum, in a solid line a2, as the dimension of the package 92 in the height direction. The height direction is a direction orthogonal to the first reference plane H. As. result, when the upper end of the package 92 is determined at a position such as a handle where the number of measurement points having the same distance from the first reference plane H is small, the dimension in the height direction of the package 92 can be measured with excellent accuracy. The threshold value for the number of measurement points is set in advance based on the experience of actually measuring the package 92 with a measure or the like.

The case of measuring the dimension in the height direction of the package 92 has been described above, but in FIG. 13, a broken line β2 indicates a relation between the distance from the second reference plane W and the number of measurement points, and an alternate long and short dash line γ2 indicates a relation between the distance from the third reference plane D and the number of measurement points. Even when the broken line β2 and the alternate long and short dash line γ2 are used, the dimensions in the width direction and the depth direction of the package 92 can be measured with excellent accuracy when the end of the package 92 is determined at the position where the number of measurement points having the same distance from the reference planes is small, as in the case of measuring the dimension in the height direction. In this example, other configurations and operations are similar to the configuration described with reference to FIGS. 1 to 10.

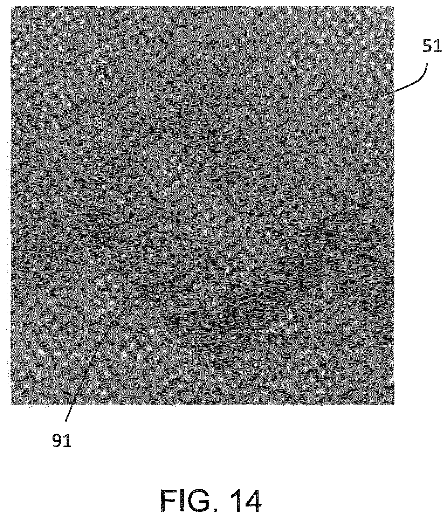

FIG. 14 is a view showing a captured image in another example of the embodiment when the package 92 is irradiated by a pattern irradiation unit in a state where the package is accommodated in the measurement compartment 51. With reference to FIG. 3, the measuring device of this example includes a pattern irradiation unit 95. The pattern irradiation unit 95 irradiates the outer surface of the package 91 with a pattern. As shown in FIG. 14, the pattern is formed of, for example, a plurality of dots of a specific color such as red. In the pattern, a portion having a high density of dots is arranged on a rectangular frame, and a group of dots arranged in a plurality of rows (three rows) and a plurality of columns (four columns) is disposed inside the rectangular frame and is repeated in two directions that are orthogonal to each other. A spacing between the dots in the group of dots is larger than a spacing between the dots on the rectangular frame. The color of the dots may be other than red, such as white.

The three-dimensional measuring device 23 (FIG. 3) measures a distance to the package 91 irradiated with the pattern, and the dimension measuring unit 32 (FIG. 3) of the control device 30 measures a dimension in a predetermined direction of the package 91 based on the measured distance. When the package 91 is irradiated with the pattern in this way, differences in brightness and shape at adjacent measurement points on the package 91 are likely to occur. Thus, measurement accuracy of the distance of each of the measurement points can be improved with the three-dimensional measuring device 23.

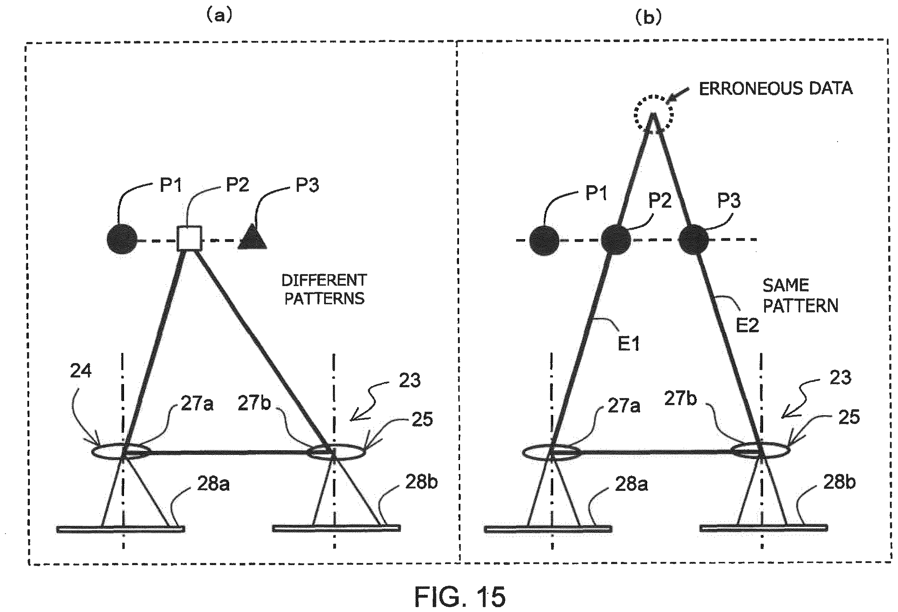

At this time, the pattern preferably includes at least a plurality of shapes having different adjacent shapes. FIG. 15 is a view showing a method of measuring distances to measurement points P1, P2, and P3 with the three-dimensional measuring device 23, FIG. 15(a) shows a case where the patterns are different to each other at the adjacent measurement points P1, P2, and P3, and FIG. 15(b) shows a case where the patterns are similar to each other at the adjacent measurement points P1, P2, and P3.

FIGS. 15(a) and 15(b) schematically show that a plurality of patterns include different shapes in a black circle, a white square, and a black triangle. As shown in FIG. 15(a), when different patterns are adjacent to each other, since the same measurement point P2 of the same pattern can be easily recognized by the first camera 24 and the second camera 25 of the three-dimensional measuring device 23, the distance from the three-dimensional measuring device 23 is easily measured. On the other hand, as shown in FIG. 15(b), when the same patterns are adjacent to each other, the first camera 24 and the second camera 25 may erroneously recognize, due to the same pattern, that different measurement points P2 and P3 are the same measurement point. In this case, there is a possibility of erroneously measuring a distance at an intersection of two rays E1 and E2 passing through the different measurement points P2 and P3 from the lenses 27a and 27b of the cameras 24 and 25. As a result, the measurement accuracy of the three-dimensional measuring device 23 may decrease. Therefore, as shown in FIG. 15(a), the package 91 or 92 is preferably irradiated with different patterns that are adjacent to each other.

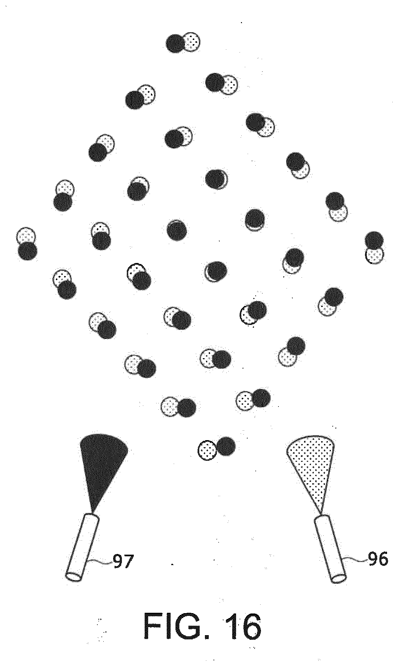

FIG. 16 shows a state where a flat surface is irradiated by pattern irradiation units 96 and 97 including light emitting parts of different emission colors in another example of the embodiment. In this case, a measuring device includes a first pattern irradiation unit 96 and a second pattern irradiation unit 97 disposed at different positions to each other. Each of the first pattern irradiation unit 96 and the second pattern irradiation unit 97 includes, for example, a laser light source and a diffusion lens that diffuses light emitted from the laser light source. The first pattern irradiation unit 96 emits light scattered in a plurality of dots of, for example, a first color (for example, green). FIG. 16 shows that the first color is in areas denoted with a grain pattern. The second pattern irradiation unit 97 emits light scattered in a plurality of dots of a second color (for example, red) that is different from the first color, for example. FIG. 16 shows that the second color is in area denoted by black.

One pattern is formed by two continuous light of the plurality of dot-shaped light emitted by the first pattern irradiation unit 96 and the plurality of dot-shaped light emitted by the second pattern irradiation unit 97 being in contact with each other or being overlapped. At this time, since the overlapping state of the light is slightly different in all of the plurality of patterns, the adjacent patterns are slightly different. The scattering forms of the patterns which are formed by irradiation of the first pattern irradiation unit 96 and the second pattern irradiation unit 97 are almost equal to each other, except that the emission color, the irradiation direction, and the irradiation position are different. In this example, the image captured by each of the cameras 24 and 25 of the three-dimensional measuring device 23 is preferably a color image. Even with a configuration of another example, it is possible to prevent the three-dimensional measuring device 23 from erroneously recognizing different measurement points as the same measurement point and to improve the measurement accuracy of the distance. In this example, other configurations and operations are similar to the configurations described with reference to FIGS. 1 to 10 or the configurations described with reference to FIGS. 11 to 13.

### REFERENCE SIGNS LIST

- 12: package delivery locker
- 13: exterior body
- 14: package delivery compartment
- 15: door
- 16: operation panel unit
- 17: operation display part
- 19: package sensor
- 20: dimension measuring device (measuring device)
- 23: three-dimensional measuring device
- 24: first camera
- 25: second camera
- 26: distance calculation unit
- 30: control device
- 31: calculation processing unit
- 32: dimension measuring unit
- 35: storage unit
- 36: interface
- 51: measurement compartment
- 52: door
- 53: bottom plate part
- 53a: lower surface part
- 54: right wall part
- 54a: second side surface part
- 55: left wall part
- 56: rear wall part
- 56a: first side surface part
- 57: top plate part
- 58: reference corner
- 59: opening
- 91,92: package
- 95: pattern irradiation unit
- 96: first pattern irradiation unit
- 97: second pattern irradiation unit.

## Claims

1. A dimension measuring device, comprising:
a compartment in which a to-be-measured object is accommodated so as to be capable of being taken in and out;
a three-dimensional measuring device including two cameras that capture images of the to-be-measured object accommodated in the compartment from different positions, and configured to measure a distance to the to-be-measured object from the images captured by the two cameras; and
a control device configured to register coordinates of three reference planes approximate to three adjacent surfaces of the compartment and orthogonal to each other in a state where the to-be-measured object is not accommodated in the compartment, to obtain, based on distances to a plurality of measurement points of the to-be-measured object measured by the three-dimensional measuring device in a state where the to-be-measured object is accommodated in the compartment, distances from the three reference planes relating to each of the plurality of measurement points, and to measure dimensions of the to-be-measured object in directions orthogonal to the three reference planes based on, relating to each of the three reference planes, the number of measurement points having the same distance from the three reference planes.

2. The dimension measuring device according to claim 1, wherein
the control device measures a distance, at which the number of measurement points having the same distance from at least one reference plane of the three reference planes is maximum, as a dimension of the to-be-measured object in the direction orthogonal to the reference plane.

3. The dimension measuring device according to claim 1, wherein
the control device measures a distance at which the number of measurement points reaches a threshold value by movement in a distance increasing direction from a distance at which the number of measurement points is maximum in a line indicating a relation between a distance from at least one reference plane of the three reference planes and the number of measurement points, as a dimension of the to-be-measured object in the direction orthogonal to the reference plane.

4. The dimension measuring device according to any one of claims 1 to 3, further comprising:
an irradiation unit configured to irradiate the to-be-measured object with a pattern, wherein
the three-dimensional measuring device measures a distance to the to-be-measured object irradiated with the pattern.

5. The dimension measuring device according to claim 4, wherein
the pattern includes at least a plurality of shapes having different adjacent shapes.

6. A package delivery locker comprising the dimension measuring device according to any one of claims 1 to 5.
